# EUROPÄISCHE PATENTANMELDUNG

(11) **EP 1 203 548 A1**
(43) Veröffentlichungstag der Anmeldung: **08.05.2002**
(21) Anmeldenummer: 00811030.6
(22) Anmeldetag: 03.11.2000
(51) Int. Cl.: A47F 3/00, F16B 12/00

(54) **Bausatz für Glasmöbel**

(71) Anmelder: Felix, Peter, 8045 Zürich (CH)
(72) Erfinder: Felix, Peter, 8045 Zürich (CH)
(74) Vertreter: Liebetanz, Michael, Dipl.-Phys.

(57) **Zusammenfassung**

Ein Bausatz zur Erstellung eines Glasmöbels umfasst eine Mehrzahl von Glaselementen (1, 2, 3, 4). An einem ersten dieser Glaselemente (1) ist ein erstes Klettbandstück (12) und an einem zweiten dieser Glaselemente (2) ein zweites Klettbandstück (21) derart angebracht, dass die beiden Glaselemente (1, 2) zum Zwecke der Erstellung des Glasmöbels miteinander verbindbar sind, indem das erste und das zweite Klettbandstück (12, 21) nach Art eines Klettverschlusses durch Aneinanderdrücken miteinander verbunden werden.

Der Bausatz gewährleistet grosse gestalterische Freiheiten zur Erstellung von unterschiedlichen Glasmöbeln aus wiederverwendbaren Glaselementen.

## Beschreibung

### Technisches Gebiet

Die Erfindung betrifft einen Bausatz zur Herstellung von Glasmöbeln sowie ein aus einem solchen Bausatz zusammengesetztes Glasmöbel.

### Stand der Technik

Glasmöbel sind üblicherweise aus einer Mehrzahl von miteinander verbundenen Glaselementen zusammengesetzt. Dabei sind die einzelnen Glaselemente typischerweise entweder durch Verkleben mittels eines geeigneten Klebstoffs oder mit Hilfe von Verbindungselementen (auch als Verbindungsbeschläge bezeichnet) fest miteinander verbunden. Nach dem Erstellen eines Glasmöbels können die miteinander verbundenen Glaselemente in der Regel nicht mehr vom Glasmöbel gelöst und für einen anderen Zweck verwendet werden. Im Falle von Klebverbindungen ist dies bereits deshalb nicht möglich, weil Klebverbindungen unlösbare Verbindungen sind. Mit Hilfe von Verbindungsbeschlägen können zwar wahlweise wieder lösbare Verbindungen geschaffen werden. Zum Anbringen der Verbindungsschläge an den Glaselementen sind diese jedoch entweder mit den Beschlägen entsprechenden Ausnehmungen, Bohrungen, Anschlägen usw. versehen, oder die Beschläge sind unlösbar an den Glaselementen festgeklebt. Somit können zwar einzelne Glaselemente unter Umständen zu Ersatz- und Reparaturzwecken vom Glasmöbel gelöst werden. Weil die Glaselemente jedoch auch im Falle von auf Verbindungsbeschlägen beruhenden Verbindungen jeweils spezifisch für ein bestimmtes Glasmöbel ausgebildet sind, können sie selbst nach einem allfälligen Loslösen vom Glasmöbel nicht für andere Zwecke verwendet werden.

Weil einerseits Glasmöbel und die zur Erstellung von Glasmöbeln benötigten Glaselemente vergleichsweise teuer sind und andrerseits Möbel im Allgemeinen und insbesondere Glasmöbel relativ rasch ändernden Modeströmungen unterworfen sind, besteht der Bedarf nach Glasmöbeln, die aus wiederverwendbaren Glaselementen hergestellt sind.

### Darstellung der Erfindung

Aufgabe der Erfindung ist die Angabe eines aus wiederverwendbaren Glaselementen hergestellten Glasmöbels.

Die Lösung der Aufgabe ist durch die Merkmale des Anspruchs 1 definiert. Gemäss der Erfindung umfasst ein Bausatz zur Erstellung eines Glasmöbels eine Mehrzahl von Glaselementen. An einem ersten dieser Glaselemente ist ein erstes Klettbandstück fest angebracht, und an einem zweiten dieser Glaselemente ist ein zweites Klettbandstück fest angebracht. Die Klettbandstücke sind derart an den Glaselementen angebracht, dass die beiden Glaselemente zum Zwecke der Erstellung des Glasmöbels miteinander verbindbar sind, indem sie so gegeneinander gedrückt werden, dass das erste und das zweite Klettbandstück nach Art eines Klettverschlusses durch Aneinanderdrücken miteinander verbunden werden.

Unter einem Klettband wird ein Druckverschlussband (auch als Druckschliessband bezeichnet) verstanden, das durch Andrücken an ein anderes Klettband wahlweise wieder lösbar mit diesem verbindbar ist. Eine Verschlussvorrichtung zum wiederholten Schliessen und Öffnen, die mit zwei Klettbandstücken versehen ist, welche zum Schliessen der Verschlussvorrichtung durch Aneinanderdrücken miteinander verbunden und zum Öffnen der Verschlussvorrichtung durch Auseinanderreissen voneinander getrennt werden können, wird als Klettverschluss bezeichnet. Klettverschlüsse sind insbesondere zum Verschliessen und Öffnen von Kleidungsstücken und Schuhen weit verbreitet, wobei die wahlweise wieder lösbar miteinander verbindbaren Klettbandstücke typischerweise streifenförmig ausgebildet sind und als Klettbandstreifen bezeichnet werden.

Indem die Glaselemente des erfindungsgemässen Bausatzes mittels Verbindungsvorrichtungen in Form von wahlweise wieder lösbaren Klettverschlüssen miteinander verbindbar und zu Glasmöbeln zusammensetzbar sind, können die Glaselemente bei Bedarf problemlos und zerstörungsfrei wieder voneinander gelöst werden und z.B. zu einem anderen Glasmöbel zusammengesetzt oder sogar für einen gänzlich anderen Zweck verwendet werden. Die einzelnen, mit Klettbandstücken versehenen Glaselemente sind beliebig oft wiederverwendbar. Der erfindungsgemässe Bausatz ermöglicht die Herstellung von Glasmöbeln in unterschiedlichsten Formen, wobei die Glasmöbel an individuelle Bedürfnisse angepasst, nach einer gewissen Zeit wieder verändert und an wechselnde Modetrends und/oder geänderte Raumverhältnisse angepasst werden können. Durch die Erfindung wird ein variables Glasmöbelsystem geschaffen, das grosse gestalterische Freiheiten zur Erstellung von unterschiedlichen Möbeln aus wiederverwendbaren Glaselementen gewährleistet.

Gemäss einer bevorzugten Ausführungsart der Erfindung ist wenigstens eines oder vorzugsweise sogar sämtliche Klettbandstücke aus einem Klettbandmaterial vom Typ Pilzkopfklettband gefertigt. Pilzkopfklettbänder bestehen aus einem Bandmaterial, dessen Oberseite mit einer Vielzahl von pilzförmigen Köpfen versehen ist. Ein Pilzkopfklettband kann mit einem anderen, identisch ausgebildeten Pilzkopfklettband durch einfaches Zusammendrücken verbunden werden, wobei die pilzförmigen Köpfe der beiden Bänder gegenseitig einrasten. Klettband vom Typ Pilzkopfklettband weist den grossen Vorteil auf, dass nur ein einziger Bandtyp zur Herstellung von Klettverschlüssen erforderlich ist. Demgegenüber sind bei den weit verbreiteten Klettverschlüssen auf der Basis von Haken- und Schlingenbändern für jeden Klettverschluss stets paarweise zwei Verbindungselemente aus zwei verschiedenen Bandtypen - einem Hakenband und einem Schlingenband - erforderlich. Durch die ausschliessliche Verwendung von Klettbandstücken vom Typ Pilzkopfklettband können bei entsprechenden Formen der Glaselemente jeweils zwei mit Klettbandstücken versehene Glaselemente stets nach Art eines Klettverschlusses miteinander verbunden werden, ohne dass auf den Typ der Klettbandstücke geachtet werden muss. Dadurch gewährleistet der Bausatz gemäss dieser Ausführungsart der Erfindung eine grosse Vielfalt von Kombinationsmöglichkeiten zum Erstellen von unterschiedlichen Glasmöbeln.

Vorzugsweise sind die Klettbandstücke derart bemessen und an den Glaselementen angeordnet, dass sie gleichzeitig als Markierungsmittel zur Erleichterung der Montage der aus dem Bausatz zu erstellenden Glasmöbel dienen. Für diesen Zweck können die Klettbandstücke z.B. alle gleich lang bemessen und in einem regelmässigen Raster an den Glaselementen angeordnet sein. Im Falle eines Bausatzes mit Glaselementen in Form von ebenen, rechteckigen Glasplatten können z.B. Klettbandstücke in Form von 10 cm langen Streifen in regelmässiger Abfolge mit jeweils 10 cm Zwischenraum entlang der Glasplattenränder angeordnet sein, so dass ein regelmässiger Raster von aufeinanderfolgenden Streifen und Zwischenräumen von jeweils 10 cm Länge entsteht. Selbstverständlich sind auch Raster mit anderen Streifenlängen und/oder anderen Zwischenraumlängen möglich.

Gemäss einer weiteren bevorzugten Erfindungsvariante sind wenigstens zwei, vorzugsweise sogar sämtliche Glaselemente des Bausatzes als ebene Glasplatten ausgebildet. Solche ebenen Glasplatten können für Transport- und Lagerzwecke platzsparend gestapelt werden. Die beiden Oberflächen einer ebenen Glasplatte, welche zu der durch die Glasplatte definierten Ebene parallel sind, werden nachfolgend als Hauptflächen der Glasplatte bezeichnet, während die üblicherweise rechtwinklig zu den Hauptflächen angeordneten Randseiten der Glasplatte nachfolgend als Stirnflächen der Glasplatte bezeichnet werden.

Vorzugsweise sind wenigstens zwei, vorzugsweise sogar sämtliche Glaselemente des Bausatzes ebene Glasplatten mit einer rechteckigen Form sind. Rechteckige Glasplatten sind vergleichsweise einfach und kostengünstig herstellbar. Zudem können sie auf vielfältige Arten miteinander kombiniert werden, um Möbel in unterschiedlichen Formen herzustellen.

Eine weitere bevorzugte Ausführungsart eines erfindungsgemässen Bausatzes mit ebenen Glasplatten zeichnet sich dadurch aus, dass an einer Stirnseite einer ersten Glasplatte ein erstes Klettbandstück und an einer Hauptfläche einer anderen, zweiten Glasplatte ein zweites Klettbandstück derart angebracht sind, dass mittels der beiden Klettbandstücke die erste Glasplatte stirnseitig mit der Hauptfläche der zweiten Glasplatte nach Art eines Klettverschlusses verbindbar ist. Auf diese Art können rechtwinklig zueinander anzuordnende Glasplatten äusserst einfach miteinander verbunden werden. Insbesondere kann an einer Hauptfläche einer Glasplatte mit einem geraden Rand ein Klettbandstreifen in unmittelbarer Nähe dem geraden Rand entlang verlaufend angeordnet werden. Eine solche Glasplatte kann dann mit einer weiteren Glasplatte, die ebenfalls einen geraden Rand hat und dessen diesen Rand definierende Stirnseite mit einem Klettbandstreifen versehen ist, derart unter einem rechten Winkel verbunden werden, dass die beiden Glasplatten nach Art von zwei Wänden eines quaderförmigen Körpers angeordnet sind, die entlang einer Quaderkante nach Art eines Klettverschlusses miteinander verbunden sind.

Gemäss der Erfindung ist ein Glasmöbel aus einem Bausatz mit einer Mehrzahl von Glaselementen erstellt, wobei an einem ersten dieser Glaselemente ein erstes Klettbandstück und an einem zweiten dieser Glaselemente ein zweites Klettbandstück fest angebracht sind und wobei diese beiden Glaselemente mittels der Klettbandstücke nach Art eines Klettverschlusses miteinander verbunden sind. Aufgrund der klettverschlussartigen Verbindung können die Glaselemente wieder vom Glasmöbel gelöst und für andere Zwecke wiederverwendet werden.

Vorzugsweise sind sämtliche der miteinander verbundenen Glaselemente des Glasmöbels lediglich mittels Klettbandstücken miteinander verbunden, so dass das Glasmöbel keine weiteren Verbindungsmittel aufweist. Das Glasmöbel ist somit frei von weiteren Verbindungsmitteln wie z.B. Metall- oder Kunststoffbeschlägen. Ein solches Glasmöbel hat eine einfache, elegante Form und ist zudem äusserst kostengünstig auf einfache Art herstellbar.

Weiter wird bevorzugt, dass an einer als Standfläche für das Glasmöbel vorgesehenen Unterseite wenigstens eines der Glaselemente ein Klettbandstück derart angebracht ist, dass es in einer auf einem Boden stehenden Anordnung des Glasmöbels nach Art einer Schutzauflage zwischen dieser Unterseite und dem Boden angeordnet ist. Dieses Klettbandstück kann somit zwei Funktionen ausüben: Es kann einerseits, wenn es an der Unterseite eines Glasmöbels angeordnet ist, als Schutzauflage nach Art einer Sockelauflage oder eines Möbelgleiters dienen, welche die Standfläche des Glasmöbels schützt (insbesondere dann, wenn dieses z.B. auf einem Steinboden aufgestellt ist); oder es kann als Verbindungselement zum Verbinden des Glaselementes, an dem es angebracht ist, mit weiteren Glaselement dienen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine Seitenansicht eines Glasmöbels, das aus einem Bausatz gemäss einer bevorzugten Ausführungsart der Erfindung erstellt ist;
- Fig. 2: das Glasmöbel aus Fig. 1 in einer Ansicht von unten.

Grundsätzlich sind in den Figuren gleiche Teile mit gleichen Bezugszeichen versehen.

### Wege zur Ausführung der Erfindung

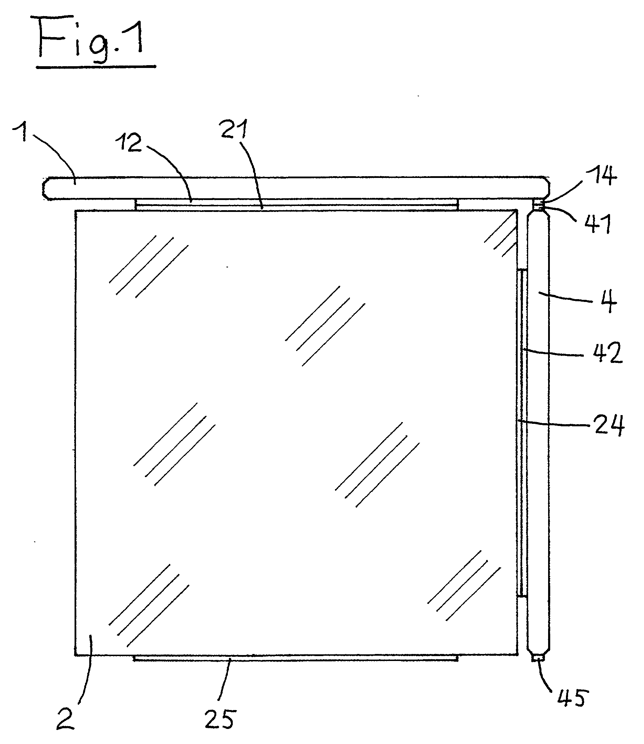

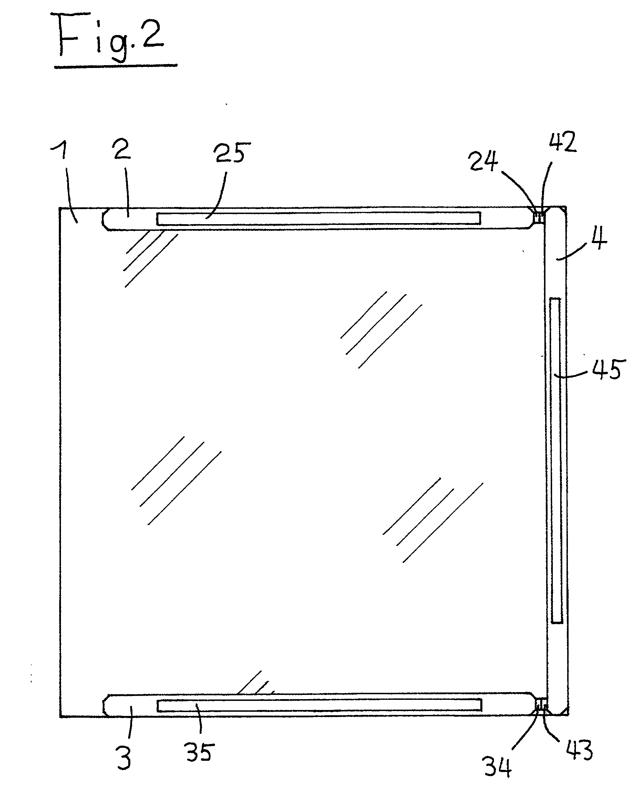

In den Figuren 1 und 2 ist ein Glastischchen gemäss einer bevorzugten Ausführungsart der Erfindung dargestellt.

Das in den Figuren 1 und 2 dargestellte Glastischchen hat eine im Wesentlichen kubische Form und ist mit Decken-, Rück- und Seitenwänden in Form von ebenen, rechteckigen oder quadratischen Glasplatten 1, 2, 3, 4 versehen. Es umfasst zwei vertikal und parallel zueinander angeordnete, quadratische Glasplatten 2, 3 (Seitenwandplatten 2, 3), welche die Seitenwände 2, 3 des Glastischchens bilden. Hinten sind diese beiden Seitenwandplatten 2, 3 je mit einer die Rückwand 4 des Glastischchens bildenden rechteckigen Glasplatte 4 (Rückwandplatte 4) verbunden, die vertikal und rechtwinklig zu den beiden Seitenwandplatten 2, 3 angeordnet ist und gleich hoch ist wie diese. Oben auf den beiden Seitenwandplatten 2, 3 und der Rückwandplatte 4 aufliegend ist eine die Decke 1 des Glastischchens bildende quadratische Glasplatte 1 horizontal angeordnet, wobei diese Deckenplatte 1 entlang ihrer seitlichen und hinteren Ränder mit den beiden Seitenwandplatten 2, 3 und entlang ihres hinteren Randes mit der Rückwandplatte 4 verbunden ist. Die Front- und Unterseiten der im Wesentlichen kubischen Aussenform des Glastischchens sind offen. Der Bausatz, aus dem das in den Figuren 1 und 2 dargestellte Glastischchen zusammengesetzt ist, umfasst somit vier Glasplatten 1, 2, 3, 4, welche als Seitenwände 2, 3, Rückwand 4 und Deckenwand 1 für das Glastischchen verwendbar sind.

Zum Zwecke der Verbindung mit den anderen Glasplatten und/oder zum Zwecke einer Schutzauflage für die Standflächen des Glastischchens sind alle vier Glasplatten 1, 2, 3, 4 mit Klettbandstreifen 12, 14, 21, 24, 25, 34, 35, 41, 42, 43, 45 versehen, die fest an den Glasplatten 1, 2, 3, 4 angebracht sind. Sämtliche Klettbandstreifen 12, 14, 21, 24, 25, 34, 35, 41, 42, 43, 45 sind je identisch zueinander ausgebildet, d.h., sie sind je gleich lang und aus dem gleichen Klettbandmaterial gefertigt. Bei dem in Fig. 1 und 2 dargestellten Ausführungsbeispiel der Erfindung sind die Klettbandstreifen 12, 14, 21, 24, 25, 34, 35, 41, 42, 43, 45 aus einem Bandmaterial vom Typ "Pilzkopfklettband" gefertigt, das von der Firma 3M unter der Bezeichnung "Dual Lock" vertrieben wird. Die Klettbandstreifen 12, 14, 21, 24, 25, 34, 35, 41, 42, 43, 45 sind je fest und unlösbar mittels eines Klebstoffs an den jeweiligen Glasplatten 1, 2, 3, 4 angeklebt.

An der eine Hauptfläche der Deckenplatte 1 bildenden Unterseite der Deckenplatte 1 sind den beiden Seitenrändern entlang, unmittelbar neben diesen Seitenrändern, je ein Klettbandstreifen 12 mittig in Bezug auf die Länge dieser Seitenränder angebracht. Diese Klettbandstreifen 12 wirken mit zwei Klettbandstreifen 21 zusammen, welche je auf den Stirnseiten der Seitenwandplatten 2, 3 bildenden Oberseiten der beiden Seitenwandplatten 2, 3 angebracht sind. Jede der beiden Seitenwandplatten 2, 3 ist somit jeweils mittels eines an ihrer Oberseite angebrachten Klettbandstreifens 21 und eines neben dem entsprechenden Seitenrand an der Unterseite der Deckenplatte 1 angebrachten Klettbandstreifens 12 stirnseitig mit der eine Hauptfläche der Deckenplatte 1 bildenden Unterseite der Deckenplatte 1 verbunden, wobei die beiden Klettbandstreifen 12, 21 jeweils nach Art eines Klettverschlusses miteinander verbunden sind. Dabei sind die Klettbandstreifen 21 an den Oberseiten der Seitenwandplatten 2, 3 einerseits und die den Seitenrändern entlang an der Unterseite der Deckenplatte 1 angebrachten Klettbandstreifen 12 andrerseits derart angeordnet, dass - wenn die entsprechenden Klettbandstreifen 12, 21 jeweils genau übereinanderliegend miteinander verbunden werden - die Deckenplatte 1 gerade in der für das Glastischchen richtigen Lage bezüglich den Seitenwandplatten 2, 3 positioniert ist. Die an den Oberseiten der Seitenwandplatten 2, 3 und an der Unterseite der Deckenplatte 1 angeordneten Klettbandstreifen 21, 12 dienen somit nicht bloss zum Verbinden der Seitenwandplatten 2, 3 mit der Deckenplatte 1, sondern sie dienen gleichzeitig auch als Markierungsmittel, welche die Montage des aus den Glasplatten 1, 2, 3, 4 zusammengesetzten Glastischchens erleichtern.

An der Unterseite der Deckenplatte 1 ist deren rückseitigen Rand entlang, unmittelbar neben diesem Rand, ein weiterer Klettbandstreifen 14 mittig in Bezug auf die Länge dieses rückseitigen Randes angebracht. Dieser Klettbandstreifen 14 wirkt mit einem Klettbandstreifen 41 zusammen, welcher auf der eine Stirnseite der Rückwandplatte 4 bildenden Oberseite der Rückwandplatte 4 angebracht ist. Die Rückwandplatte 4 ist mittels des an ihrer Oberseite angebrachten Klettbandstreifens 41 und des entlang dem rückseitigen Rand an der Unterseite der Deckenplatte 1 angebrachten Klettbandstreifens 14 stirnseitig mit der eine Hauptfläche der Deckenplatte 1 bildenden Unterseite der Deckenplatte 1 verbunden, wobei die beiden Klettbandstreifen 14, 41 nach Art eines Klettverschlusses miteinander verbunden sind. Der Klettbandstreifen 41 an der Oberseite der Rückwandplatte 4 und der dem rückseitigen Rand entlang an der Unterseite der Deckenplatte 1 angebrachte Klettbandstreifen 14 sind wiederum derart angeordnet, dass - wenn diese beiden Klettbandstreifen 41, 14 genau übereinanderliegend miteinander verbunden werden - die Deckenplatte 1 gerade in der für das Glastischchen richtigen Lage bezüglich der Rückwandplatte 4 positioniert ist.

An der eine Hauptfläche der Rückwandplatte 4 bildenden Vorderseite der Rückwandplatte 4 sind den beiden Seitenrändem entlang, unmittelbar neben diesen Seitenrändern, je ein Klettbandstreifen 42, 43 mittig in Bezug auf die Länge dieser Seitenränder angebracht. Diese Klettbandstreifen 42, 43 wirken mit zwei Klettbandstreifen 24, 34 zusammen, welche je auf den Stirnseiten der Seitenwandplatten 2, 3 bildenden Hinterseiten der beiden Seitenwandplatten 2, 3 angebracht sind. Jede der beiden Seitenwandplatten 2, 3 ist somit jeweils mittels eines an ihrer Hinterseite angebrachten Klettbandstreifens 24, 34 und eines neben dem entsprechenden Seitenrand an der Vorderseite der Rückwandplatte 4 angebrachten Klettbandstreifens 42, 43 stirnseitig mit der eine Hauptfläche der Rückwandplatte 4 bildenden Vorderseite der Rückwandplatte 4 verbunden, wobei die beiden Klettbandstreifen 24, 42, 34, 43 jeweils nach Art eines Klettverschlusses miteinander verbunden sind. Dabei sind die Klettbandstreifen 24, 34 an den Hinterseiten der Seitenwandplatten 2, 3 einerseits und die den Seitenrändern entlang an der Vorderseite der Rückwandplatte 4 angebrachten Klettbandstreifen 42, 43 andrerseits derart angeordnet, dass - wenn die entsprechenden Klettbandstreifen 24, 42, 34, 43 jeweils genau übereinanderliegend miteinander verbunden werden - die Rückwandplatte 4 gerade in der für das Glastischchen richtigen Lage bezüglich den Seitenwandplatten 2, 3 positioniert ist. Die an den Hinterseiten der Seitenwandplatten 2, 3 und an der Vorderseite der Rückwandplatte 4 angeordneten Klettbandstreifen 24, 34, 42, 43 dienen somit wiederum auch als Markierungsmittel, welche das Zusammensetzen der Glasplatten 2, 3, 4 im Zuge der Montage des Glastischchens erleichtern.

Die Unterseite der Rückwandplatte 4 bildet eine Stirnseite derselben und dient als Standfläche, auf welcher das in Fig. 1 und 2 dargestellte Glastischchen auf dem Boden (nicht dargestellt) steht. Mittig in Bezug auf die Länge dieser Unterseite ist ein Klettbandstreifen 45 unten an dieser Unterseite angebracht. Dieser hat bei dem in Fig. 1 und 2 dargestellten Glastischchen keine Verbindungsfunktion, sondern er dient als Schutzauflage zum Schutze der Unterseite der Rückwandplatte 4. Wenn das Glastischchen auf einem flachen Boden steht, ist dieser Klettbandstreifen 45 derart zwischen der Unterseite der Rückwandplatte 4 und dem Boden angeordnet, dass die Rückwandplatte 4 den Boden nirgends direkt berührt. Der Klettbandstreifen 45 bildet dann eine die Rückwandplatte 4 schützende Zwischenschicht zwischen der Rückwandplatte 4 und dem Boden.

Auf analoge Art wie die Unterseite der Rückwandplatte 4 sind auch die Unterseiten der beiden Seitenwandplatten 2, 3, die ebenfalls als Standflächen für das in Fig. 1 und 2 dargestellte Glastischchen dienen, je mit einem Klettbandstreifen 25, 35 versehen, welche die Funktion von Schutzauflagen haben und zwischen dem Boden und den Unterseiten der Seitenwandplatten 2, 3 angeordnet sind.

Zusammenfassend ist festzustellen, dass durch die Erfindung ein Bausatz angegeben wird, der grosse gestalterische Freiheiten zur Erstellung von unterschiedlichen Glasmöbeln aus wiederverwendbaren Glaselementen gewährleistet.

## Patentansprüche

1. Bausatz mit einer Mehrzahl von Glaselementen (1, 2, 3, 4) zur Erstellung eines Glasmöbels, **dadurch gekennzeichnet, dass** an einem ersten dieser Glaselemente (1) ein erstes Klettbandstück (12) und an einem zweiten dieser Glaselemente (2) ein zweites Klettbandstück (21) derart angebracht ist, dass die beiden Glaselemente (1, 2) zum Zwecke der Erstellung des Glasmöbels miteinander verbindbar sind, indem das erste und das zweite Klettbandstück (12, 21) nach Art eines Klettverschlusses durch Aneinanderdrücken miteinander verbunden werden.

2. Bausatz nach Anspruch 1, **dadurch gekennzeichnet, dass** wenigstens eines, vorzugsweise sogar sämtliche Klettbandstücke (12, 14, 21, 24, 25, 34, 35, 41, 42, 43, 45) vom Typ Pilzkopfklettband sind.

3. Bausatz nach Anspruch 1 oder 2, **gekennzeichnet durch** eine Bemessung und Anordnung der Klettbandstücke (12, 14, 21, 24, 25, 34, 35, 41, 42, 43, 45) an den Glaselementen derart, dass sie gleichzeitig als Markierungsmittel zur Erleichterung der Montage der aus dem Bausatz zu erstellenden Glasmöbel dienen.

4. Bausatz nach einem der Ansprüche 1 bis 3, **dadurch gekennzeichnet, dass** wenigstens zwei, vorzugsweise sogar sämtliche Glaselemente (1, 2, 3, 4) des Bausatzes ebene Glasplatten (1, 2, 3, 4) sind.

5. Bausatz nach einem der Ansprüche 1 bis 4, **dadurch gekennzeichnet, dass** wenigstens zwei, vorzugsweise sogar sämtliche Glaselemente (1, 2, 3, 4) ebene Glasplatten (1, 2, 3, 4) mit einer rechteckigen Form sind.

6. Bausatz nach Anspruch 4 oder 5, **dadurch gekennzeichnet, dass** an einer Stirnseite einer ersten Glasplatte (1) ein erstes Klettbandstück (12) und an einer Hauptfläche einer anderen, zweiten Glasplatte (2) ein zweites Klettbandstück (21) derart angebracht sind, dass mittels der beiden Klettbandstücke (12, 21) die erste Glasplatte (1) stimseitig mit der Hauptfläche der zweiten Glasplatte (2) verbindbar ist.

7. Glasmöbel, erstellt aus einem Bausatz nach einem der Ansprüche 1 bis 6 mit einer Mehrzahl von Glaselementen (1, 2, 3, 4), **dadurch gekennzeichnet, dass** an einem ersten dieser Glaselemente (1) ein erstes Klettbandstück (12) und an einem zweiten dieser Glaselemente (2) ein zweites Klettbandstück (21) fest angebracht sind, wobei diese beiden Glaselemente (1, 2) mittels der Klettbandstücke (12, 21) nach Art eines Klettverschlusses miteinander verbunden sind.

8. Glasmöbel nach Anspruch 7, **dadurch gekennzeichnet, dass** sämtliche der miteinander verbundenen Glaselemente (1, 2, 3, 4) des Glasmöbels lediglich mittels Klettbandstücken (12, 14, 21, 24, 34, 41, 42, 43) miteinander verbunden sind.

9. Glasmöbel nach Anspruch 7 oder 8, **dadurch gekennzeichnet, dass** an einer als Standfläche für das Glasmöbel vorgesehenen Unterseite eines Glaselementes (4) ein Klettbandstück (45) derart angebracht ist, dass es in einer auf einem Boden stehenden Anordnung des Glasmöbels nach Art einer Schutzauflage (45) zwischen dieser Unterseite und dem Boden angeordnet ist.
